# EUROPÄISCHE PATENTSCHRIFT

(11) **EP 2 679 548 B1**
(45) Veröffentlichungstag und Bekanntmachung des Hinweises auf die Patenterteilung: **01.04.2015**
(21) Anmeldenummer: 12173979.1
(22) Anmeldetag: 28.06.2012
(51) Int. Cl.: C03B 9/193, C03B 9/32, C03B 9/16, B65D 1/02

(54) **Verfahren und Vorrichtung zur Herstellung eines Hohlglaskörpers**
Method and device for producing a hollow glass body
Procédé et dispositif de fabrication d'un corps en verre creux

(43) Veröffentlichungstag der Anmeldung: 01.01.2014
(60) Teilanmeldung: 14002205.4
(73) Patentinhaber: Saint-Gobain Oberland AG, 88410 Bad Wurzach (DE)
(72) Erfinder: Jaenecke, Stefan, 88339 Bad Waldsee (DE)
(74) Vertreter: Engelhardt & Engelhardt

(56) Entgegenhaltungen:
- WO-A1-2009/090749
- BE-A- 433 840
- FR-A1- 2 153 382
- US-A- 3 231 355
- US-A- 4 836 839
- US-A- 4 842 630
- US-A- 5 411 564

## Beschreibung

Die Erfindung bezieht sich auf ein Verfahren sowie eine Vorrichtung zur Herstellung eines Hohlglaskörpers mittels einer IS-Maschine, durch die der Hohlglaskörper im Press-Blas- oder im Blas-Blas-Prozess gefertigt ist.

Solche bekannten Verfahren und Vorrichtungen werden insbesondere in der Massenproduktion zur Herstellung von Hohlglaskörpern wie Wasser-bzw. Bierflaschen oder dgl. eingesetzt. Die Hohlglaskörper weisen unterschiedlich groß bemessene Außenkonturen auf und werden üblicherweise mit sogenannten IS-Maschinen (individual section) hergestellt. Die IS-Maschinen zeichnen sich dadurch aus, dass in einem ersten Vorform-Verfahrensschritt aus einem Glastropfen eine Vorform mit Hilfe eines Presshubes oder mit Hilfe von Druckluft erzeugt ist, die anschließend unmittelbar an eine benachbarte weitere Bearbeitungsstation der IS-Maschine übergeben wird, an der dann mit Hilfe eines Blasvorganges die endgültige Kontur des Hohlglaskörpers erzeugt ist, so dass Glashohlkörper mit Hinterschnitt hergestellt werden können. Dabei sind eine Vielzahl von solchen IS-Maschinen benachbart zueinander angeordnet, so dass in der Massenproduktion innerhalb zeitlich eng begrenzten Zeitfenstern eine Vielzahl von solchen Hohlglaskörpern hergestellt werden können.

Im sogenannten Press-Blas-Verfahren zur Herstellung von Hohlglaskörpern ist es üblicherweise vorgesehen, den Pegel und dessen runden Pegelkopf in eine bestimmte Position durch das Antriebsmittel anzuheben und den Vorformer gemeinsam mit dem Mündungswerkzeug aufzusetzen. Das Mündungswerkzeug weist eine runde Innenkontur auf. Der Durchmesser des Pegelkopfes ist kleiner bemessen als der Innendurchmesser des Mündungswerkzeuges, so dass der Pegelkopf das Mündungswerkzeug durchgreifen kann ohne dieses zu beschädigen. Der Abstand zwischen der Innenkontur des Mündungswerkzeuges und der Außenkontur des Pegelkopfes entspricht nach dem Herstellungsverfahren der Wandstärke des Hohlglaskörpers. Sobald der Vorformer und das Mündungswerkzeug mittels eines verschwenkbar an der IS-Maschine angebrachten Greifarmes aufgesetzt sind, wird durch eine in dem Vorformer vorgesehene Durchgangsöffnung ein Glastropfen eingefüllt, der auf dem Pegelkopf aufliegt. Nach dem Einfüllen des erhitzten Glases wird die Durchgangsöffnung mittels eines Vorformbodens verschlossen und der Pegel durch ein Antriebsmittel in Richtung des Mündungswerkzeuges bzw. des Vorformbodens zugestellt. Somit presst der Pegel in den flüssigen Glastropfen eine vorgegebene Kontur ein, die anschließend, beispielsweise bei einer Flasche als Ausgussöffnung, vorgesehen ist. Sobald dieser Pressvorgang beendet ist, wird der Pegel durch das Antriebsmittel von einem oberen Totpunkt in einen unteren Totpunkt überführt und der Greifarm nimmt das Mündungswerkzeug und das darin ein gepresste Glas als Vorform zu einer benachbarten Bearbeitungsstation, an der anschließend mittels Ausblasen mit Pressluft die endgültige Kontur des Hohlglaskörpers erzeugt wird.

Im sogenannten Blas-Blas-Verfahren weist der Pegel mindestens eine Druckluftleitung auf. Der Pegel wird derart in Richtung des Mündungswerkzeuges und durch diesen zugestellt, dass in dem Glastropfen eine Mulde entsteht, in die anschließend Druckluft eingeblasen wird, so dass mit Hilfe der Druckluft eine Verformung des Glastropfens erzeugt ist und sich die Konturen an dem Hohlglaskörper ergeben.

Diese Verfahrensabläufe und der Einsatz von sogenannten IS-Maschinen haben sich in der Praxis zur Massenfertigung von Hohlglaskörpern bewährt. Es ist jedoch nicht bekannt, eine unrunde oder nicht-rotationssymmetrische Innenkontur in die Vorform des Hohlglaskörpers mit Hilfe eines entsprechend ausgestalteten Pegelkopfes einzuarbeiten. Auch ist es nicht bekannt, die Außenkontur der Vorform des Hohlglaskörpers in einer beliebigen geometrischen Gestaltung um die Innenkontur auszurichten.

Es ist daher Aufgabe der Erfindung, ein Verfahren und eine Vorrichtung der eingangs genannten Gattung zur Verfügung zu stellen, mit denen es möglich ist, nahezu beliebige geometrische Konturen in einen Glastropfen mit Hilfe einer IS-Maschinen einzuformen, um anschließend in einem weiteren Bearbeitungsschritt an der IS-Maschine den Hohlglaskörper in seiner endgültigen geometrischen Ausgestaltung zu fertigen, ohne dass bei dem Presshub des Pegels bzw. dessen Pegelkopfes und dem Mündungswerkzeug Beschädigung entstehen.

Diese Aufgabe ist erfindungsgemäß durch die Merkmale der kennzeichnenden Teile von den Patentansprüchen 1 und 5 gelöst.

Weitere vorteilhafte Weiterbildungen der Erfindung ergeben sich aus den Unteransprüchen.

Dadurch, dass der Pegel in einer vorgegebenen Position lagerorientiert in dem Führungsrohr eingesetzt ist, und dadurch, dass in der Außenkontur des Führungsrohres eine Führungseinrichtung, die mit einer Positionierungseinrichtung, die an der Innenwand des Positionierungsringes angearbeitet ist, zusammenwirkt, ist der Pegel, das Führungsrohr und der Positionierungsring an der IS-Maschine ausgerichtet, die als Bezugspunkt dient. Somit kann an dem Pegel ein Pegelkopf angearbeitet werden, der eine nahezu beliebige Außenkontur, beispielsweise ein Oval, eine Ellipse oder konkav bzw. konvex gekrümmt oder wellenförmig ausgestaltet ist, um ein Hohlglaskörper zu fertigen, dessen Innenkontur im Bereich der Öffnung unrund oder nicht-rotationssymmetrisch gestaltet ist.

Da das Mündungswerkzeug über den Vorformer und den Greifarm lagerorientiert ausgerichtet und während des Bearbeitungsprozesses gehalten ist und der Greifarm an der IS-Maschine angelengt ist, liegt auch für das Mündungswerkzeug eine bezogen auf die IS-Maschine ausgerichtete Position vor, so dass der Pegelkopf und das Mündungswerkzeug derart zueinander ausgerichtet sind, dass der Pegelkopf das Mündungswerkzeug nicht beschädigt, vielmehr in dieses eintaucht, und folglich die Konturen des Mündungswerkzeuges und des Pegelkopfes den Verlauf der Wand eines Hohlglasbehälters im Bereich dessen Öffnung erzeugen.

In der Zeichnung ist ein erfindungsgemäßes Ausführungsbeispiel dargestellt, das nachfolgend näher erläutert ist. Im Einzelnen zeigt:
- Figur 1: eine Vorrichtung, bestehend aus einem Führungsrohr in dem ein Pegel axial beweglich eingesetzt ist und aus einem Mündungwerkzeug, zwischen denen eine erhitzte Glasmasse eingefüllt ist, zur Bildung eines Hohlglaskörpers mit einer viereckigen Ausgussöffnung, in Explosionsdarstellung,
- Figur 2a: die Vorrichtung gemäß Figur 1, im unteren Totpunkt, im Schnitt,
- Figur 2b: die Vorrichtung gemäß Figur 2a mit eingefülltem Glastropfen und einem aufgesetzten Vorformer, in angehobenem Zustand,
- Figur 2c: die Vorrichtung und den Vorformer gemäß Figur 2b im oberen Totpunkt,
- Figur 3a: den nach den Verfahrensschritten der Figuren 2a bis 2c oder 2d hergestellten Hohlglaskörper mit einer viereckigen Ausgussöffnung, in perspektivischer Ansicht,
- Figur 3b bis Figur 3d: verschiedene geometrische Verläufe der Wand des Hohlglasbehälters im Bereich der Öffnung, in Draufsicht und
- Figur 4: den Pegel gemäß Figur 1, in perspektivischer Ansicht.

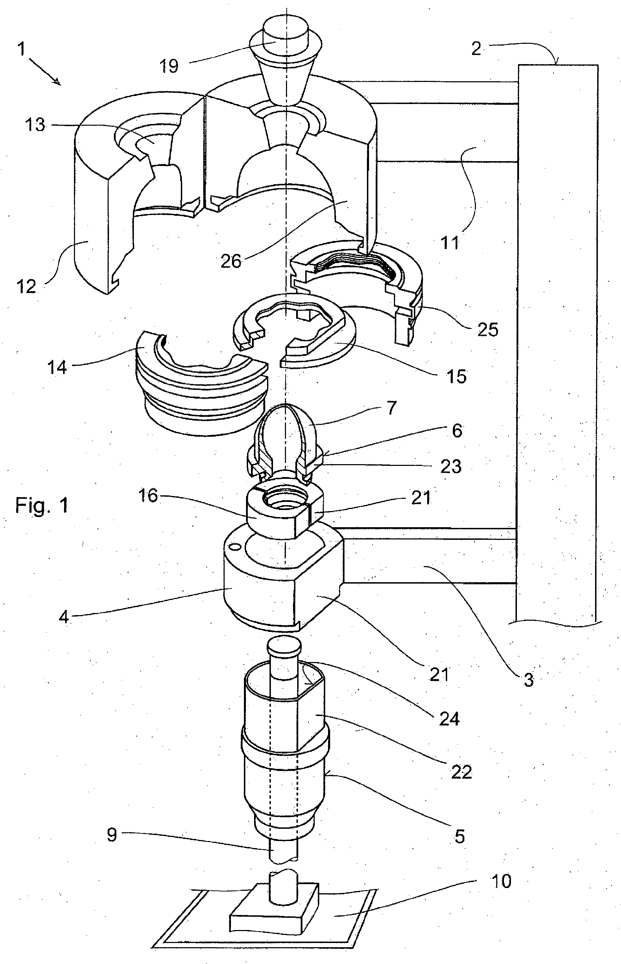

In Figur 1 ist eine Vorrichtung 1 zum Pressen eines erhitzten Glastropfens 27 gezeigt, aus dem in einem ersten Verfahrensschritt eine Vorform 28 und durch einen zweiten Verfahrensschritt ein Hohlglaskörper 30 an einer sogenannten IS-Maschine 2 entsteht. Die IS-Maschine 2 dient als Bezugspunkt zum Ausrichten der die Vorrichtung 1 bildenden Bauteile. Durch die IS-Maschine 2 wird an den Glastropfen 27 im Press-Blas-, Engmund-Press-Blas- oder Blas-Blas-Prozess der Glashohlkörper 30 mit Hinterschneidungen geformt.

Die IS-Maschine 2 besteht aus einem Haltearm 3 an dem ein Positionierungsring 4 befestigt ist. Der Positionierungsring 4 weist eine an dessen Innenmantelfläche angearbeitete Positionierungseinrichtung 21 in Form einer Anlagefläche auf. Durch den Positionierungsring 4 ist ein Führungsrohr 5 umgriffen und lageorientiert gehalten. Zur Ausrichtung des Führungsrohres 5 ist an dieses eine Führungseinrichtung 22 in Form einer Anlagefläche angearbeitet, so dass im montierten Zustand die Positionierungseinrichtung 21 und die Führungseinrichtung 22 fluchtend übereinander liegen und somit durch den Positionierungsring 4 die lageorientierte Ausrichtung und Fixierung des Führungsrohres 5 vorgegeben ist.

An der Innenmantelfläche des Führungsrohres 5 ist eine Positionierungseinrichtung 24 in Form einer Anlagefläche angearbeitet, durch die ein in dem Führungsrohr 5 axial verschiebbarer Pegel 6 gehalten ist, da an dem Pegel 6 eine Führungseinrichtung 23 in Form einer Anlagefläche angearbeitet ist, die im montierten Zustand fluchtend über der Positionierungseinrichtung 24 des Führungsrohres 5 angeordnet ist, so dass durch das Zusammenwirken der Führungseinrichtung 23 und der Positionierungseinrichtung 24 der Pegel 6, bezogen auf die IS-Maschine 2, ausgerichtet und in dem Führungsrohr 5 lageorientiert gehalten ist.

Zur Bildung der Positionierungseinrichtungen 21 und 24 sowie der Führungseinrichtungen 22 und 23 könnten auch andersartig ausgestaltete Bauteile verwendet werden. Beispielsweise ist es ohne weiteres möglich, in den Positionierungsring 4, das Führungsrohr 5 und den Pegel 6 linear Führungsnuten einzuarbeiten und zwischen diesen Bauteilen ein Glotz oder eine Schiene in die jeweilige Linearführungsnut einzusetzen, so dass durch diese eine in Umfangsrichtung verlaufende Kraft aufgenommen und abgestützt ist und durch diese auch eine lageorientierte Positionierung des Pegels 6 zu dem Führungsrohr 5 und vom dem Führungsrohr 5 zu dem Positionierungsring 4 erreicht ist.

Um den Pegel 6 axial in dem Führungsrohr 5 bewegen zu können, ist dieser mit einer Kolbenstange 9 verbunden, die in trieblichem Wirkkontakt mit einem Antriebsmittel 10, beispielsweise einem pneumatisch oder hydraulisch betriebenen Kolben, steht. Mit Hilfe des Antriebsmittels 10 kann somit die Kolbenstange 9 und der Pegel 6 hubweise zwischen einem unteren und einem oberen Totpunkt betätigt werden.

Um den Pegel 6 möglichst ohne großen Zeitverlust austauschen zu können, ist ein Pegeladapter 16 vorhanden, der aus zwei Halbschalen gebildet ist, die von dem Pegel 6 abgenommen werden können, wenn dieser aus dem Führungsrohr 5 herausgefahren wird. Durch den Pegeladapter 16 ist der Pegel 6 mit der Kolbenstange 9 trieblich verbunden.

In Figur 1 ist desweiteren zu entnehmen, dass an dem Pegel 6 ein Pegelkopf 7 angeformt oder angearbeitet ist, dessen Außenkontur viereckig ausgestaltet ist.

Zur Verformung des Glastropfens 27 ist ein mit dem Pegelkopf 7 zusammenwirkendes Mündungswerkzeug 14 vorzusehen, das aus zwei Halbschalen gebildet ist, die von einem zweiteilig ausgestaltetem Vorformer 12 in montiertem Zustand umgriffen sind. Die beiden Hälften des Mündungswerkzeuges 14 sind vom Deckelring 15 umschlossen, die durch einen Vorformer 14 mit einer Führungseinrichtung 26 zueinander ausgerichtet sind. Der Vorformer 12 ist mittels eines an der IS-Maschine 2 verschwenkbar angelenkten Greifarm 11 und zu der IS-Maschine 2 als Bezugspunkt ausgerichtet. Darüber hinaus weist die Innenmantelfläche des Vorformers 12 eine Führungseinrichtung 26 auf, die mit einer an dem Mündungswerkzeug 14 auf dessen Außenwand angearbeiteten Positionierungseinrichtung 25 derart zusammenwirkt, dass das Mündungswerkzeug 14 lageorientiert in dem Vorformer 12 gehalten ist und somit die Position bzw. die Ausrichtung des Mündungswerkzeuges 14 über den Deckelring 15 und den Vorformer 12 und den Greifarm 11 bezogen auf die IS-Maschine 2 exakt eingestellt werden kann, so dass der Pegel 6 bzw. dessen Pegelkopf 7 zu dem Mündungswerkzeug 14 ausgerichtet ist und der Pegelkopf 7 in das Mündungswerkzeug 14 eintauchen kann, ohne dass die Außenkontur des Pegelkopfes 7 an die Innenwand des Mündungswerkzeuges 14 stößt. Zwischen dem Mündungswerkzeug 14 und dem Pegelkopf 7 ist nämlich ein Luftspalt vorzusehen, der der Wandstärke des Hohlglaskörpers 30 entspricht.

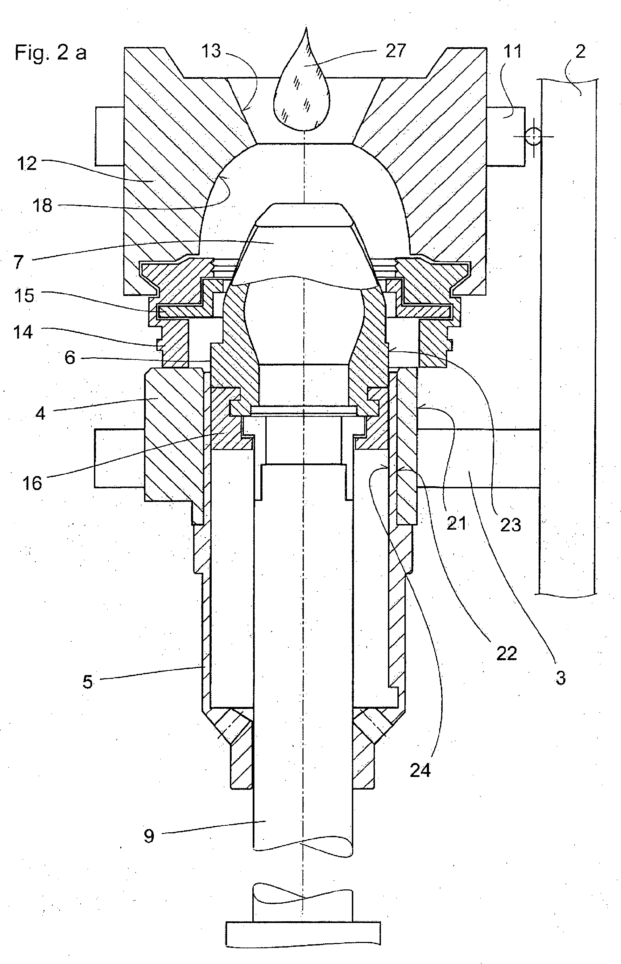

In Figur 2a ist der Pegel 6 aus dem unteren Totpunkt in eine mittlere Position angehoben und der Vorformer 12 sowie das Mündungswerkzeug 14 sind auf dem Pegel 6 aufgesetzt und umgreifen diesen. In den Vorformer 12 ist eine Durchgangsöffnung 13 eingearbeitet, durch die der Glastropfen 27 auf den Pegelkopf 7 eingefüllt ist.

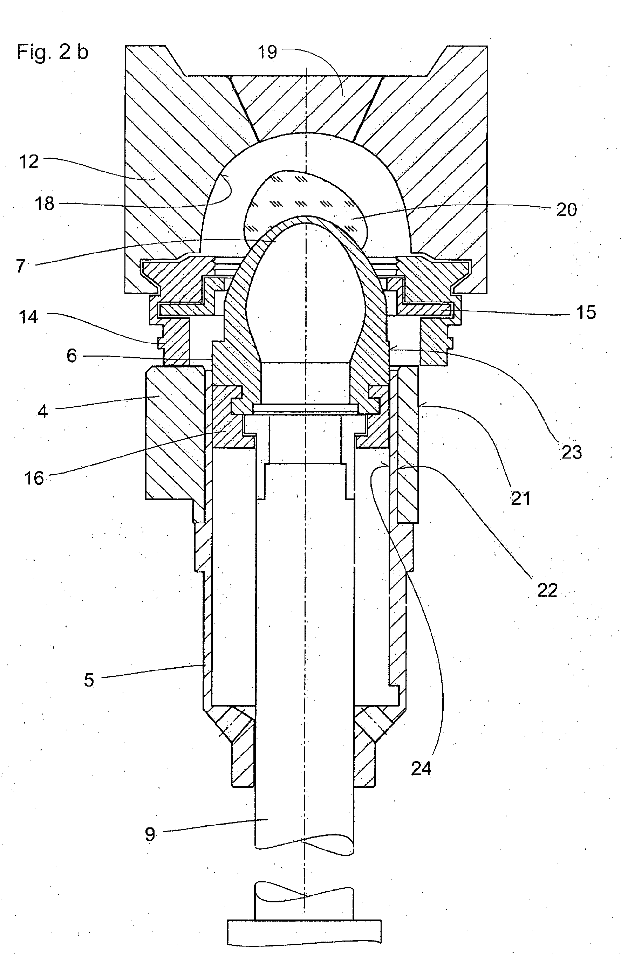

In Figur 2b ist zu entnehmen, dass die Durchgangsöffnung 13 mittels eines Vorformbodens 18 verschlossen ist, um beim Zustellen des Pegelkopfes 7 eine vollständig geschlossene Anschlagsfläche vorzusehen, an der der Glastropfen 27 anliegt.

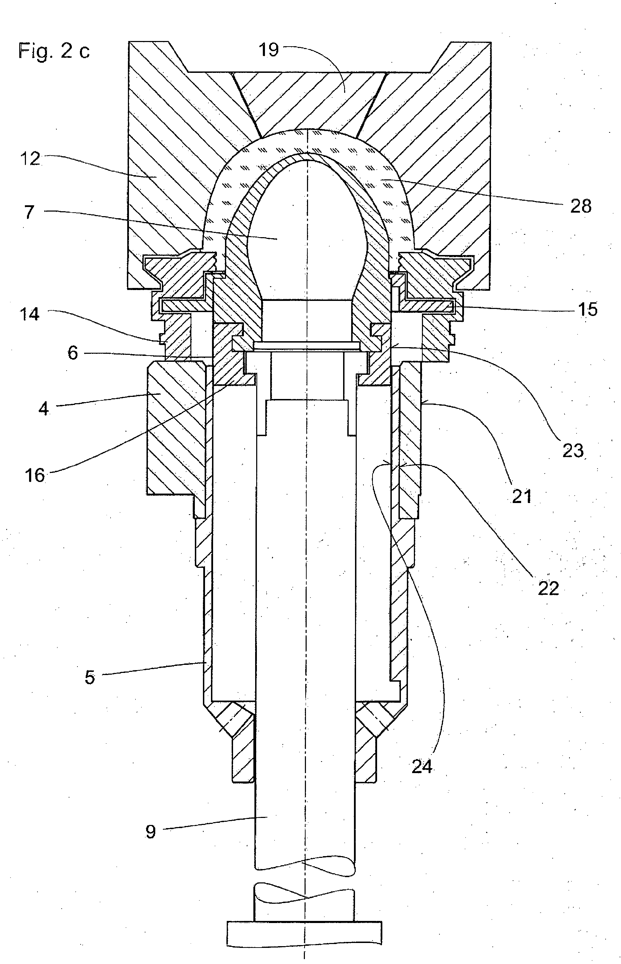

In Figur 2c ist gezeigt, dass der Pegel 6 in den oberen Totpunkt überführt bzw. zugestellt ist und dass durch diese Hubwegbewegung aus dem Glastropfen 27 eine Vorform 28 hergestellt ist. Die Außenkontur des Pegelkopfes 7 ist dabei in die Vorform 28 eingedrückt, so dass die viereckige Außenkontur des Pegelkopfes 7 in der Vorform 28, und zwar in deren Innenwand, eingearbeitet ist.

Die Innenkontur des Mündungswerkzeuges 14 sowie die Innenkontur des Vorformers 12 beeinflussen die Außenkontur der Vorform 28. Insbesondere weist das Mündungswerkzeug 14 einen umlaufenden Ring auf, der als Hinterschneidung in die Außenwand der Vorform 28 eingearbeitet ist und bei dem hergestellten Hohlglaskörper 30 als Haltering eines Kronkorkens dienen kann.

Der Vorformer 12 wird nach dem Preßhub des Pegels 6 abgenommen, der Pegel 6 fährt zunächst in den unteren Totpunkt und der Greifarm 11 überführt das Mündungswerkzeug 14 und die Vorform 28, die durch das Mündungswerkzeug 14 gehalten ist, zu einer benachbarten Bearbeitungsstation der IS-Maschine 2, an der anschließend der Hohlglaskörper 30 im Blasverfahren mit Hinterschneidungen hergestellt ist.

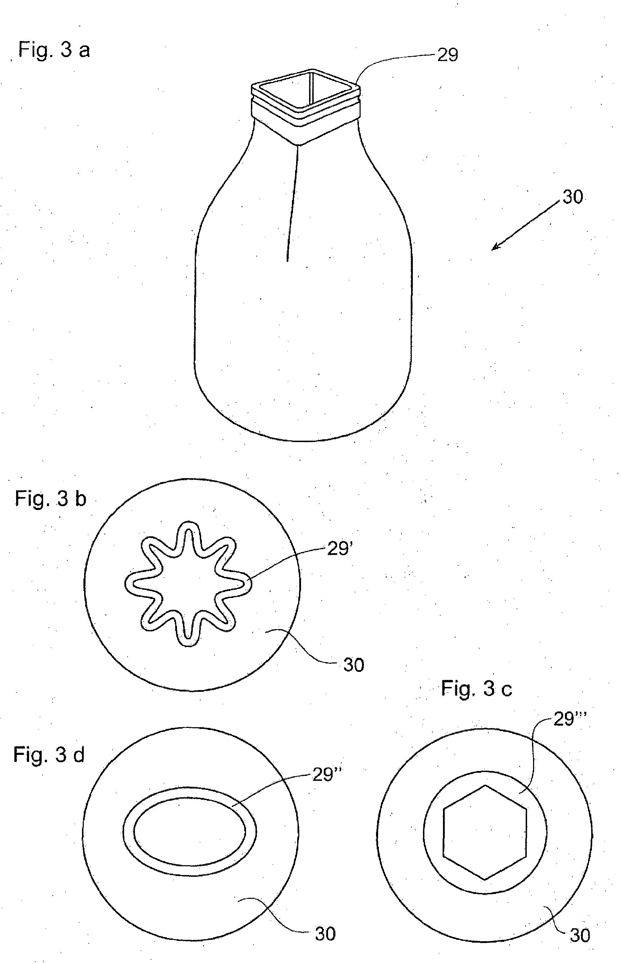

In Figur 3a ist der Hohlglaskörper 30 in Form einer Flasche abgebildet. Der Hohlglaskörper 30 weist eine viereckförmige Ausgussöffnung 29 auf, da gemäß den Figuren 1 bis 2d die Außenkontur des Pegelkopfes 7 viereckig ausgestaltet ist und diese die Innenwand der Ausgussöffnung 23 erzeugt. Das Mündungswerkzeug 14 ist korrespondierend zu der Außenkontur des Pegelkopfes 7 ausgerichtet gewesen, so dass sich insgesamt eine viereckförmige Außenkontur der Ausgussöffnung 29 des Hohlglaskörpers 30 erzeugen lässt.

In Figur 3b ist gezeigt, dass die Innenkontur des Hohlglaskörpers 30 als Blüte oder wellenförmig ausgestaltet ist und dass die Außenkontur des Hohlglaskörpers 30 rund um die derart ausgestaltete Ausgussöffnung 29 angeordnet ist. Demnach hat der Pegelkopf 7 die wellenförmige oder blütenförmige Außenkontur aufgewiesen und die Innenkontur des Mündungswerkzeuges 14 ist rund ausgestaltet.

In Figur 3c ist eine sechseckige Innenkontur mit einer runden diese umschließende Außenkontur des Hohlglaskörpers 30 gezeigt, so dass beispielsweise eine beliebig geometrisch gestaltete Innenkontur an einem Hohlglaskörper 30 angearbeitet werden kann, die dann gleichwohl von einem runden Kronkorken verschlossen werden kann.

In Figur 3d ist eine ovale oder elliptische Ausgestaltung der Innen- und Außenkontur der Ausgussöffnung 29 eines Hohlglaskörpers 30 zu entnehmen.

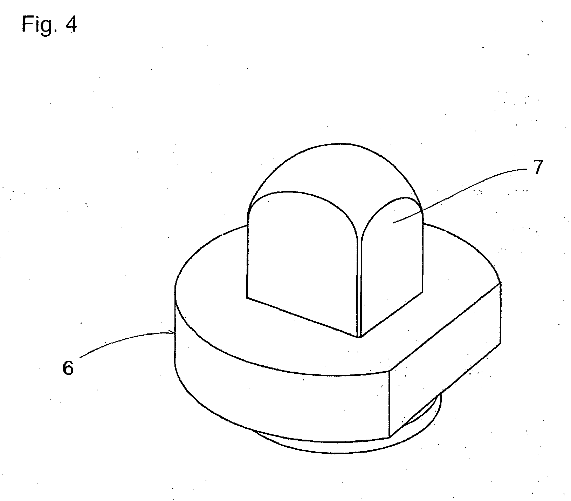

In Figur 4 ist in vergrößerter Darstellung der Pegel 6 und der Pegelkopf 7 dargestellt. Der Pegelkopf 7 weist eine viereckförmige vorzugsweise quadratische Außenkontur auf, die als nicht-rotationssymmetrisch anzusehen ist. Der Pegelkopf 7 kann dabei jede beliebige nicht-rotationssymmetrische Außenkontur einnehmen; diese kann beispielsweise mehreckig, oval, elliptisch, konkav bzw. konvex gekrümmt oder wellenförmig gestaltet sein. Die bekannten Innenkonturen, die rund ausgestaltet sind, werden dagegen als rotationssymmetrische Innenkontur verstanden. Es ist erforderlich, dass mindestens eine Symmetrieebene vorhanden ist, die als Teilungsebene für das Mündungswerkzeug 14 und den Vorformer 12 dienen.

## Patentansprüche

1. Verfahren zur Herstellung eines Hohlglaskörpers (30) mittels einer IS-Maschine (2), im Press-Blas-, Engmund-Press-Blas oder im Blas-Blas-Prozess, mit einem Antriebsmittel (10), durch das ein Pegel (6) axial bewegbar angetrieben ist,
gekennzeichnet durch die Verfahrensschritte:
- Ausrichten und Anbringen eines Positionierungsringes (4) unmittelbar oder über Zwischenglieder (3) an der IS-Maschine (2), an dem eine Positionierungseinrichtung (21) vorgesehen ist,
- Ausrichten eines Führungsrohres (5) an dessen äußeren Mantelfläche eine im montierten Zustand mit der Positionierungseinrichtung (21) des Positionierungsringes (4) zusammenwirkende Führungseinrichtung (22) angearbeitet ist,
- Ausrichten eines Pegels (6) mit einem nicht-rotationssymmetrischen Pegelkopf (7), an dem eine Führungseinrichtung (23) angearbeitet ist, die mit einer an oder in der Innenmantelfläche des Führungsrohres (5) vorhandenen Positionierungseinrichtung (24) im montierten Zustand derart zusammenwirkt, dass die nicht-rotationssymmetrische Außenkontur des Pegelkopfes (7) ein der IS-Maschine (2) zugeordnetes Mündungswerkzeug (14) während des Press- oder Blasvorganges durchgreift und dass die Konturen des Pegelkopfes (7) und des Mündungswerkzeuges (14) den Verlauf der Innen- bzw. Außenwand des Hohlglaskörpers (30) erzeugen.

2. Verfahren nach Anspruch 1,
**dadurch gekennzeichnet,**
**dass** das Mündungswerkzeug (14) von einem zweiteilig ausgestalteten Vorformer (12) umgriffen wird, während ein Glastropfen (27) durch eine in den Vorformer (12) eingearbeitete Durchgangsöffnung (13) auf den Pegelkopf (7) des Pegels (6) eingefüllt ist, dass durch den Vorformer (12) das Mündungwerkzeug (14) in Umfangsrichtung und in Längsrichtung mittels einer der Innenwand des Vorformers (2) zugeordneten Positionierungseinrichtung (25) und einer an der Außenmantelfläche des Mündungswerkzeuges (14) angearbeiteten Führungseinrichtung (26) lageorientiert gehalten ist und dass ein Deckelring (15) zu dem Mündungswerkzeug (14) ausgerichtet ist.

3. Verfahren nach Anspruch 1 oder 2,
**dadurch gekennzeichnet,**
**dass** vor dem Presshub des Pegels (6) oder vor dem Einblasen von Druckluft durch den Pegel (6) die Durchgangsöffnung (13) des Vorformers (12) mittels eines Vorformbodens (18) verschlossen wird.

4. Verfahren nach Anspruch 3,
**dadurch gekennzeichnet,**
**dass** nach dem Presshub des Pegels (6) oder dem Einblasen von Druckluft in den Glastropfen (27) der Vorformer (12) und der Vorformboden (18) von dem Pegel (6) abgenommen werden und dass das Mündungswerkzeug (14) und die Vorform (28) von dem Greifarm (11) an eine weitere Bearbeitungsstation der IS-Maschine (2) zur Fertigstellung des Hohlglaskörpers (30) mittels Hinterschneidungen weitergegeben werden.

5. Vorrichtung (1), insbesondere zur Durchführung der vorgenannten Verfahrensschritte, bestehend aus einer IS-Maschine (2), an der ein Haltearm (3) und ein verschwenkbarer Greifarm (11) angeordnet sind, aus einem an dem Haltearm (3) angebrachten Positionierungsring (4), aus einem von dem Positionierungsring (4) umgriffenen Führungsrohr (5), aus einem Pegel (6), der in dem Führungsrohr (5) an dessen Innenmantelfläche anliegt und durch dieses axial geführt gehalten ist und aus einer Kolbenstange (9), die trieblich mit dem Pegel (6) und einem Antriebsmittel (10) verbunden ist,
**dadurch gekennzeichnet,**
dass an dem Pegel (6) ein nicht-rotationssymmetrischer Pegelkopf (7) angearbeitet ist, dass der Pegel (6) eine Führungseinrichtung (23) aufweist, die mit einer Positionierungseinrichtung (24), die an oder in der Innenmantelfläche des Führungsrohres (5) an- oder eingearbeitet ist, derart zusammenwirkt, dass die Position des Pegels (6) in Umfangsrichtung zu der Position des Führungsrohres (5) ausgerichtet und lageorientiert ist, dass der Pegel (6) während des axialen Hubes in Umfangsrichtung geführt gehalten ist, dass an oder in der Außenmantelfläche des Führungsrohres (5) eine Führungseinrichtung (22) an- oder eingearbeitet ist und dass in der Innenmantelfläche des Positionierungsringes (4) eine Positionierungseinrichtung (21) vorgesehen ist, die mit der Führungseinrichtung (22) des Führungsrohres (5) derart zusammenwirkt, dass das Führungsrohr (5) zu dem Positionierungsring (4) ausgerichtet und in Umfangsrichtung lageorientiert gehalten ist.

6. Vorrichtung nach Anspruch 5,
**dadurch gekennzeichnet,**
dass an dem Greifarm (11) der IS-Maschine (2) ein zweiteilig ausgestalteter Vorformer (12), in dem eine Durchgangsöffnung (13) vorgesehen ist, angebracht ist, und dass der Vorformer (12) ein Mündungswerkzeug (14) und einen Deckelring (15) umgreift, an deren Außenmantelfläche eine Positionierungseinrichtung (25) vorgesehen ist, die mit einer an der Innenseitenwand des Vorformers (12) angearbeiteten Führungseinrichtung (26) derart zusammenwirkt, dass das Mündungswerkzeug (14) und der Deckelring (15) lageorientiert gehalten und in Umfangsrichtung abgestützt ist.

7. Vorrichtung nach Anspruch 5,
**dadurch gekennzeichnet,**
dass die Positionierungseinrichtung (21) an dem Positionierungsring (4) und die Führungseinrichtung (22) des Führungsrohres (5) als zueinander fluchtende Flächen ausgestaltet sind, die nahezu spielfrei aneinander liegen, oder dass diese als Linearführungen ausgestaltet sind, in die ein Klotz oder eine Schiene zur Positionierung und Führung eingesetzt ist.

8. Vorrichtung nach Anspruch 5,
**dadurch gekennzeichnet,**
dass die Führungseinrichtung (23) des Pegels (6) und die Positionierungseinrichtung (24) des Führungsrohres (5) als Anlageflächen ausgestaltet sind, die fluchtend übereinanderliegen.

9. Vorrichtung nach Anspruch 6,
**dadurch gekennzeichnet,**
dass die Positionierungseinrichtung (25) des Mündungswerkzeuges (14) und die Führungseinrichtung (26) des Vorfomers (12) als Anlageflächen ausgestaltet sind, die fluchtend übereinanderliegen.

10. Vorrichtung nach einem der Ansprüche 5 bis 9,
**dadurch gekennzeichnet,**
dass nach dem Presshub des Pegels (6) bzw. nach dem Ausblasen des Glastropfens (27) mittels Druckluft die Vorform (28) des Hohlglasbehälters (30) gemeinsam mit dem Mündungswerkzeug (14) durch den Greifarm (11) der IS-Maschine (2) an eine benachbarte Bearbeitungsstation überführt ist.

11. Vorrichtung nach einem der Ansprüche 5 bis 10,
**dadurch gekennzeichnet,**
dass der Pegelkopf (7) des Pegels (6) mehreckig, oval, elliptisch, konkav bzw. konvex gekrümmt oder wellenförmig ausgestaltet ist.

12. Vorrichtung nach einem der Ansprüche 5 bis 11,
**dadurch gekennzeichnet,**
dass an der Innenmantelfläche des Mündungswerkzeuges (14) mindestens ein Ring angeformt ist, mittels dem in die Außenkontur des Hohlglaskörpers (30) eine umlaufende Nut eingearbeitet ist.

13. Vorrichtung nach einem der vorgenannten Ansprüche 5 bis 12,
**dadurch gekennzeichnet,**
dass die Innenkontur des Mündungswerkzeuges (14) an die Außenkontur des Pegelkopfes (7) angepasst ist, oder dass die Innenkontur des Mündungswerkzeuges (14) andersartig ausgestaltet ist, als die Außenkontur des Pegelkopfes (7).

14. Vorrichtung nach einem der Ansprüche 5 bis 13,
**dadurch gekennzeichnet,**
dass die Endform des Hohlglaskörpers (30) durch einen Formkörper erreicht ist und dass der Formkörper eine zu den vor dem Mündungswerkzeug (14) und dem Pegelkopf (7) erzeugten Geometrie des Hohlglaskörpers (30) eine dazu korrespondierende Geometrie oder eine unterschiedlich gestaltete Geometrie aufweist.

## Claims

1. Method for producing a hollow glass body (30) by means of an IS machine (2) in the press and blow, narrow-neck press and blow or blow and blow process, with a driving means (10) that moves a plunger (6) axially,
**characterised by** the process steps:
- Aligning and attaching a positioning ring (4) directly or via intermediate elements (3) on the IS machine (2), on which positioning ring (4) a positioning device (21) is provided,
- Aligning a guide tube (5), on the outer jacket surface of which a guide device (22) is worked, which interacts with the positioning device (21) of the positioning ring (4) in the assembled condition,
- Aligning a plunger (6) with a non-rotationally symmetrical plunger head (7) with a guide device (23) worked onto it, which interacts with a positioning device (24) provided in the assembled condition on or in the inner jacket surface of the guide tube (5), in such a way that the non-rotationally symmetrical outer contour of the plunger head (7) passes through an aperture tool (14) allocated to the IS machine (2) during the press or blow procedure, and that the contours of the plunger head (7) and of the aperture tool (14) generate the profile of the inner or outer wall of the hollow glass body (30).

2. The method in accordance with Claim 1,
**characterised in that**
The aperture tool (14) is enclosed by a pre-former (12) with a two-piece structure while a glass gob (27) is filled in through a passage opening (13) worked into the performer (12) onto the plunger head (7) of the plunger (6), that the pre-former (12) holds the aperture tool (14) with positional orientation in the circumferential direction and in the lengthways direction by means of a
positioning device (25) allocated to the inner wall of the pre-former (12) and a guide device (26) worked onto the outer jacket surface of the aperture tool (14), and that a cover ring (15) is aligned with the aperture tool (14).

3. The method in accordance with Claim 1 or 2,
**characterised in that**
before the press stroke of the plunger (6) or before compressed air is blown in through the plunger (6), the passage opening (13) of the pre-former (12) is closed by means of a preform base (18).

4. The method in accordance with Claim 3,
**characterised in that**
after the press stroke of the plunger (6) or after compressed air is blown into the glass gob (27), the pre-former (12) and the preform base (18) are removed from the plunger (6) and that the aperture tool (14) and the preform (28) are passed on by the gripper arm (11) to another processing station of the IS machine (2) for completing the hollow glass body (30) by means of indentations.

5. A device (1), in particular for carrying out the aforementioned process steps, comprising an IS machine (2) on which a holding arm (3) and a swivelling gripper arm (11) are arranged, of a positioning ring (4) mounted on the holding arm (3), of a guide tube (5) enclosed by the positioning ring (4), of a plunger (6) in contact with the inner jacket surface of the guide tube (5) and held with axial guidance by this, and of a piston rod (9) in a driven connection with the plunger (6) and a driving means (10),
**characterised in that**
a non-rotationally symmetrical plunger head (7) is worked onto the plunger (6),
that the plunger (6) has a guide device (23) that interacts with a positioning device (24) worked onto or into the inner jacket surface of the guide tube (5) in such a way that the position of the plunger (6) is aligned in the circumferential direction with the position of the guide tube (5) and is positionally orientated, that the plunger (6) is held and guided in the circumferential direction during the axial stroke, that a guide device (22) is worked onto or into the outer jacket surface of the guide tube (5) and that a positioning device (21) is provided in the inner jacket surface of the positioning ring (4) and interacts with the guide device (22) of the guide tube (5) in such a way that the guide tube (5) is aligned with the positioning ring (4) and is held with positional orientation in the circumferential direction.

6. The device in accordance with Claim 5,
**characterised in that**
the gripper arm (11) of the IS machine (2) has a two-piece pre-former (12) with a passage opening (13) provided in it, and that the pre-former (12) encompasses an aperture tool (14) and a cover ring (15) on the outer jacket surface of which a positioning device (25) is provided that interacts with a guide device (26) worked onto the inner sidewall of the pre-former (12) in such a way that the aperture tool (14) and the cover ring (15) are held in an orientated position and supported in the circumferential direction.

7. The method in accordance with Claim 5,
**characterised in that**
the positioning device (21) on the positioning ring (4) and the guide device (22) of the guide tube (5) are configured as surfaces that are flush with one another and are in contact almost without play, all that these are configured as linear guides with a block or a rail inserted in them for positioning and guidance.

8. The device in accordance with Claim 5,
**characterised in that**
the guide device (23) of the plunger (6) and the positioning device (24) of the guide tube (5) are configured as contact surfaces that lie flush one above the other.

9. The device in accordance with Claim 6,
**characterised in that**
the positioning device (25) of the aperture tool (14) and the guide device (26) of the pre-former (12) are configured as contact surfaces that lie flush one above the other.

10. The device in accordance with one of the Claims 5 to 9,
**characterised in that**
after the press stroke of the plunger (6) or after the glass gob (27) has been blown out by compressed air, the preform (28) of the hollow glass container (30) together with the aperture tool (14) are transferred by the gripper arm (11) of the IS machine (2) to an adjacent processing station.

11. The device in accordance with one of Claims 5 to 10,
**characterised in that**
the plunger head (7) of the plunger (6) is polygonal, oval, elliptical or has a concave or convex curvature or is undulating.

12. The device in accordance with one of Claims 5 to 11,
**characterised in that**
at least one ring is formed on the inner jacket surface of the aperture tool (14), by means of which a circumferential groove is worked into the outer contour of the hollow glass body (30).

13. The device in accordance with one of the aforementioned Claims 5 to 12,
**characterised in that**
the inner contour of the aperture tool (14) is adapted to the outer contour of the plunger head (7), or that the inner contour of the aperture tool (14) has a different configuration from the outer contour of the plunger head (7).

14. The device in accordance with one of Claims 5 to 13,
**characterised in that**
that the final shape of the hollow glass body (30) is achieved by a forming body and that the forming body has a geometry corresponding to the geometry of the hollow glass body (30) created before the aperture tool (14) and the plunger head (7), or else has a differently configured geometry.

## Revendications

1. Procédé de fabrication d'un corps en verre creux (30) moyennant une machine SI (2), à l'aide d'un procédé pression-soufflage, pression-soufflage à bouche étroite, ou soufflage-soufflage, avec un moyen d'entraînement (10) permettant d'entraîner un élément (6) axialement mobile,
**caractérisé par** les phases de procédé suivantes :
- Alignement et fixation sur la machine SI (2), soit directement soit moyennant des éléments intermédiaires (3), d'un anneau de positionnement (4) sur lequel il est prévu un équipement de positionnement (21),
- Alignement d'un tube de guidage (5) sur l'enveloppe extérieure duquel il est pratiqué un équipement de guidage (22) collaborant, en état monté, avec l'équipement de positionnement (21) de l'anneau de positionnement (4),
- Alignement d'un élément (6) possédant une tête sans symétrie de rotation (7), et sur laquelle il est formé un équipement de guidage (23) qui, en état monté, collabore avec un équipement de positionnement (24) prévu sur ou dans l'enveloppe intérieure du tube de guidage (5) de sorte que, pendant le procédé de pression ou de soufflage, le contour sans symétrie de rotation de la tête (7) de l'élément (6) passe à travers une bouche (14) assignée à la machine SI (2), et que les contours de la tête de l'élément (7) et de la bouche (14) réalisent l'allure des parois intérieure et extérieure du corps en verre creux (30).

2. Procédé d'après la revendication 1,
**caractérisé en ce que**
la bouche (14) est entourée par un élément de façonnage préalable divisé (12) tant qu'une goutte de verre (27) est remplie, à travers une ouverture de passage (13) pratiquée dans l'élément de façonnage préalable (12), sur la tête (7) de l'élément (6), que moyennant un équipement de positionnement (25) assigné à la paroi intérieure de l'élément de façonnage préalable (12) et d'un équipement de guidage (26) pratiqué sur l'enveloppe extérieure de la bouche (14), l'élément de façonnage préalable (12) positionne la bouche (14) en direction du pourtour et en direction longitudinale, et qu'un anneau de couverture (15) est aligné sur la bouche (14).

3. Procédé d'après les revendications 1 ou 2,
**caractérisé en ce que**,
avant la course de pression de l'élément (6) ou avant l'insufflation d'air comprimé à travers l'élément (6), l'ouverture de passage (13) de l'élément de façonnage préalable (12) est fermée à l'aide d'un fond de façonnage préalable (18).

4. Procédé d'après la revendication 3,
**caractérisé en ce que**,
après la course de pression de l'élément (6) ou après l'insufflation d'air comprimé dans la goutte de verre (27), l'élément de façonnage préalable (12) et le fond de façonnage préalable (18) sont retirés de l'élément (6) et que la bouche (14) et la forme préalable (28) sont transmises par un grappin (11) à une autre station de traitement de la machine SI (2) en vue de la finition du corps en verre creux (30) moyennant des contre-dépouilles.

5. Dispositif (1), en particulier pour l'exécution des phases de procédé citées, comprenant une machine SI (2) sur laquelle il est prévu un bras de retient (3) et un grappin pivotant (11), un anneau de positionnement (4) monté sur le bras de retient (3), un tube de guidage (5) enveloppé par l'anneau de positionnement (4), un élément (6) portant sur l'enveloppe intérieure du tube de guidage (5) et retenu et guidé axialement par celui-ci, et une tige de piston (9) liée par entraînement avec l'élément (6) et un moyen d'entraînement (10),
**caractérisé en ce que**
sur l'élément (6), il est monté une tête sans symétrie de rotation (7), que l'élément (6) possède un équipement de guidage (23) qui collabore avec un équipement de positionnement (24) pratiqué sur ou dans l'enveloppe intérieure du tube de guidage (5) de sorte que la position de l'élément (6) est alignée et positionnée, en direction du pourtour, par rapport à la position du tube de guidage (5), que pendant la course axiale, l'élément (6) est retenu et guidé en direction du pourtour, que sur ou dans l'enveloppe extérieure du tube de guidage (5), il est pratiqué un équipement de guidage (22) et que dans l'enveloppe intérieure de l'anneau de positionnement (4), il est prévu un équipement de positionnement (21) qui collabore avec l'équipement de guidage (22) du tube de guidage (5) de sorte que le tube de guidage (5) est aligné sur l'anneau de positionnement (4) et positionné en direction du pourtour.

6. Procédé d'après la revendication 5,
**caractérisé en ce que**
sur le grappin (11) de la machine SI (2), il est monté un élément de façonnage préalable divisé (12) dans lequel il est prévu une ouverture de passage (13) et que l'élément de façonnage préalable (12) enveloppe une bouche (14) et un anneau de couverture (15) sur l'enveloppe extérieure desquels il est prévu un équipement de positionnement (25) qui collabore avec un équipement de guidage (26) pratiqué sur la paroi latérale intérieure de l'élément de façonnage préalable (12) de sorte que la bouche (14) et l'anneau de couverture (15) sont positionnés et appuyés en direction du pourtour.

7. Procédé d'après la revendication 5,
**caractérisé en ce que**
l'équipement de positionnement (21) sur l'anneau de positionnement (4) et l'équipement de guidage (22) du tube de guidage (5) sont conçus sous la forme de surfaces en alignement précis l'une par rapport à l'autre et qui portent quasiment sans jeu l'une sur l'autre, ou que celles-ci sont conçues en tant que guidages linéaires dans lesquelles il est inséré un bloc ou une glissière en vue du positionnement ou du guidage.

8. Procédé d'après la revendication 5,
**caractérisé en ce que**
l'équipement de guidage (23) de l'élément (6) et l'équipement de positionnement (24) du tube de guidage (5) sont conçus sous la forme de surfaces de portée superposées en alignement précis l'une sur l'autre.

9. Procédé d'après la revendication 6,
**caractérisé en ce que**
l'équipement de positionnement (25) de la bouche (14) et l'équipement de guidage (26) de l'élément de façonnage préalable (12) sont conçus sous la forme de surfaces de portée superposées en alignement précis l'une sur l'autre.

10. Dispositif d'après une des revendications 5 à 9,
**caractérisé en ce que**,
après la course de pression de l'élément (6) ou après l'éjection de la goutte de verre (27) par l'air comprimé, la forme préalable (28) du corps en verre creux (30) et la bouche (14) sont transférées ensemble par le grappin (11) de la machine SI (2) à une station de traitement voisine.

11. Dispositif d'après une des revendications 5 à 10,
**caractérisé en ce que**
la tête (7) de l'élément (6) est conçue sous la forme polygonale, ovale, elliptique, concave ou convexe, ou ondulée.

12. Dispositif d'après une des revendications 5 à 11,
**caractérisé en ce que**
sur l'enveloppe intérieure de la bouche (14), il est formé au moins un anneau à l'aide duquel il est pratiqué une gorge périphérique dans le contour extérieur du corps en verre creux (30).

13. Dispositif d'après une des revendications 5 à 12,
**caractérisé en ce que**
le contour intérieur de la bouche (14) est adapté au contour extérieur de la tête (7) ou que le contour intérieur de la bouche (14) a une autre forme que le contour extérieur de la tête (7).

14. Dispositif d'après une des revendications 5 à 13,
**caractérisé en ce que**
la forme définitive du corps en verre creux (30) est réalisée à l'aide du corps de façonnage et que le corps de façonnage a une géométrie correspondante ou différente par rapport à la géométrie du corps en verre creux (30) réalisée avant la bouche (14) et la tête (7).
